**Europäisches Patentamt**

**European Patent Office**

**Office européen des brevets**

(19)

(11) Veröffentlichungsnummer: **0 045 737**
**A2**

(12) **EUROPÄISCHE PATENTANMELDUNG**

(21) Anmeldenummer: **81890135.7**

(22) Anmeldetag: **04.08.81**

(51) Int. Cl.³: **G 05 D 23/19**

(30) Priorität: **06.08.80 AT 4057/80**

(43) Veröffentlichungstag der Anmeldung:
**10.02.82 Patentblatt 82/6**

(84) Benannte Vertragsstaaten:
**AT BE DE FR GB IT**

(71) Anmelder: **ALEX. FRIEDMANN KOMMANDITGESELLSCHAFT**
**Am Tabor 6**
**A-1200 Wien(AT)**

(72) Erfinder: **Tomsu, Peter, Dipl.-Ing.**
**Urban Loritzplatz 1/18**
**A-1170 Wien(AT)**

(74) Vertreter: **Krause, Walter, Dr. Dipl.-Ing.**
**Margaretenstrasse 21**
**A-1040 Wien(AT)**

(54) **Temperaturregeleinrichtung für Klima- bzw. Heizanlagen, vorzugsweise in Eisenbahnfahrzeugen.**

(57) Um auf einfache Weise die Verwendung einer digitalen Verarbeitungseinheit (MP) für die Regeleinrichtung zu ermöglichen, ist jeder Temperaturfühler (4) der Temperaturmesseinrichtung mit einem Kondensator (C1) verbunden und dient zur Aufladung desselben mit einem temperaturproportionalen Storm. Der Kondensator (C1) ist mit einem Eingang (−) eines Komparators (2) verbunden, an dessen anderem Eingang (+) eine Referenzspannung ($U_{ref}$) liegt. Der Ausgang (10) des Komparators (2) liegt an einem Eingang (11) einer digitalen Verarbeitungseinheit (MP), die zu Beginn der Temperaturmessung den Kondensator (C1) über eine vorbestimmte Zeit entlädt, dann in gleichbleibenden zeitlichen Abständen das vom Komparator (2) gelieferte Ausgangssignal auf Änderung überprüft, und die Anzahl der Abfragen vom Ende des Entladens des Kondensators (C1) bis zur Änderung des Komparatorausgangswertes als der gemessenen Temperatur entsprechenden Digitalwert zur Verfügung stellt.

FIG.1

## Temperaturregeleinrichtung für Klima- bzw. Heizanlagen, vorzugsweise in Eisenbahnfahrzeugen

Die Erfindung betrifft eine Temperaturregeleinrichtung für Klima- bzw. Heizanlagen, vorzugsweise in Eisenbahnfahrzeugen, mit einer Temperaturmeßeinrichtung mit zumindest einem Temperaturfühler.

Bei einer bekannten Temperaturregeleinrichtung der genannten Art ist zur Erzeugung eines zur Regelung der zur überwachenden Temperatur dienenden Signals eine Schaltungseinrichtung vorgesehen, welche als wesentliche Elemente neben dem eigentlichen Temperaturfühler einen Sägezahn-Generator und einen Komparator umfaßt. Daß vom Sägezahn-Generator gelieferte Signal liegt an einem und das vom Temperaturfühler gelieferte temperaturproportionale Analogsignal am anderen Eingang des Komparators, welcher so geschaltet ist, daß die vom Sägezahn-Generator gelieferte Spannung in einer von der Größe des temperaturproportionalen Signals vom Temperaturfühler abhängigen Höhe abgeschnitten wird, sodaß die von den einzelnen Sägezahn-Spitzen in der Höhe des temperaturproportionalen Signales verbleibende Zahnbreite die Länge von am Ausgang des Komparators abgegebenen Rechteckimpulsen bestimmt. Diese Rechteckimpulse dienen als Ein- bzw. Ausschaltsignale für die eigentliche Klima- bzw. Heizanlage, welche somit in einer temperaturproportionalen Weise geregelt werden kann. Diese bekannte Temperaturregeleinrichtung hat den entscheidenden Nachteil, daß zur Berücksichtigung von unterschiedlichen bzw. wechselnden, auf die notwendige Zuordnung zwischen Temperatur und Funktion der Klima- bzw. Heizanlage einwirkenden Einflüssen ganze Teile der Schaltung ersetzt werden müssen und daß es nur mit sehr großem schaltungstechnischem Aufwand überhaupt möglich ist, kompliziertere Einflüsse auf diese Zuordnung zu berücksichtigen. Da, insbesonders in Eisenbahnfahrzeugen, der für die Klima- bzw. Heizanlage und die dafür notwendige Temperaturregeleinrichtung zur Verfügung stehende Platz ziemlich begrenzt ist, ist dieser zusätzliche Schaltungsaufwand, abgesehen von den Mehrkosten für Herstellung und Montage, sehr ungünstig.

Die Erfindung geht aus von der Idee, eine digitale Verarbeitungseinheit, wie etwa einen Mikroprozessor, für eine Temperaturregeleinrichtung der eingangs genannten Art zu verwenden, was verglichen mit der genannten, bekannten Ausführung einige entscheidende Vorteile bringt. So können unterschiedliche bzw. wechselnde Einflüsse auf die Zuordnung von Temperatur zu Funktion der Klima- bzw. Heizanlage auf einfache Weise durch eine Änderung des von der digitalen Verarbeitungseinheit bestimmten Programms ohne jegliche Schaltungsänderung durchgeführt werden. Der gesamte Schaltungsaufwand verringert sich beträchtlich, was sich insbesonders bei den beschränkten Platzverhältnissen in Eisenbahnfahrzeugen sehr günstig auswirkt.

Zur Verarbeitung eines Signales, wie etwa des temperaturproportionalen, von den Temperaturfühlern gelieferten Signales, in einer digitalen Verarbeitungseinheit muß dieses Signal jedoch am entsprechenden Eingang der Verarbeitungseinheit in digitaler Form eingegeben werden, wozu die Temperaturfühler bzw. die Temperaturmeßeinrichtung der genannten bekannten Ausführung jedoch nicht in der Lage sind.

Es sind in anderem Zusammenhang Digital-Thermometer bzw. -temperaturregler bekannt, welche die über Temperaturfühler gelieferten temperaturproportionalen Ströme bzw. Spannungen über einen direkt angeschlossenen IC-Baustein in ein, der vom Temperaturfühler gemessenen Temperatur in einer von einem IC-Baustein vorbestimmten Weise entsprechendes, digitales Kontrollsignal umwandeln. Der erforderliche IC- Baustein macht den Aufbau dieser bekannten Digital-Temperaturmeßeinrichtung kompliziert und kostspielig, was insbesonders auch bei der Verwendung für die Temperaturregeleinrichtung von Klima- bzw. Heizanlagen in Eisenbahnfahrzeugen, wegen der unter Umständen relativ großen erforderlichen Anzahl derartiger Temperaturmeßeinrichtungen, sehr nachteilig ist.

Aufgabe der vorliegenden Erfindung ist es, eine Temperaturregeleinrichtung der eingangs genannten Art so zu verbessern, daß auf einfache Weise die Verwendung einer digitalen Verarbeitungseinheit für die Regeleinrichtung ermöglicht wird und daß insbesonders der Schaltungsaufwand der Temperaturmeßeinrichtung gering gehalten wird.

Dies wird gemäß der Erfindung dadurch erreicht, daß der bzw. jeder Temperaturfühler mit einem bzw. je einem Kondensator verbunden ist und zur Aufladung des Kondensators mit einem temperaturproportionalen Strom dient, daß der Kondensator mit einem Eingang eines Komparators verbunden ist, an dessen anderem Eingang eine Referenzspannung liegt und der, sobald die Kondensatorspannung die Referenzspannung erreicht, seinen Ausgangswert ändert, daß der Ausgang des Komparators an einem Eingang einer digitalen Verarbeitungseinheit, z. B. eines Mikroprozessors, liegt, die so geschaltet ist, daß zu Beginn der Temperaturmessung, gesteuert durch die Verarbeitungseinheit, der Kondensator sich über eine vorbestimmte Zeit entlädt, daß dann in gleichbleibenden zeitlichen Abständen das vom Komparator gelieferte Ausgangssignal von der digitalen Verarbeitungseinheit auf Änderung überprüfbar ist, und die Anzahl der Abfragen vom Ende des Entladens des Kondensators bis zur Änderung des Komparatorausgangswertes als der gemessenen Temperatur entsprechender Digitalwert in der digitalen Verarbeitungseinheit bzw. an einem ihrer Ausgänge zur Verfügung steht. Die Temperaturmeßeinrichtung besteht also im wesentlichen aus einem Meßwertbilder, einem Komparator und einer Referenzspannungsquelle, wobei sich der Meßwertbilder aus dem eigentlichen Temperaturfühler und dem von diesem aufgeladenen Kondensator zusammensetzt. Der Temperaturfühler liefert auf bekannte und für das Funktionieren der vorliegenden Erfindung nicht weiter wichtige Art einen der gemessenen Temperatur proportionalen Strom, welcher zur Aufladung des zu Beginn der Messung, gesteuert durch die digitale Verarbeitungseinheit, z. B. einen Mikroprozessor, über eine an der digitalen Verarbeitungseinheit vorbestimmte Zeit endladenen Kondensators dient. Zur Entladung des Kondensators ist es besonders vorteilhaft, wenn nach einem weiteren Vorschlag der Erfindung, ein mit dem Kondensator verbundener Entladetransistor vorgesehen ist, dessen Basis mit einem Ausgang der digitalen Verarbeitungseinheit verbunden ist, welche so geschaltet ist, daß zu Beginn der Temperaturmessung "logisch 1" an der Basis des Entladetransistors liegt und sich damit über eine vorbestimmte Zeit der Kondensator entlädt und daß dann "logisch Ø" an der Basis des Transistors liegt. Dies stellt eine besonders einfache Schaltungsanordnung für die zu Beginn jeder Temperaturmessung notwendige Entladung des Kondensators dar. Die an der digitalen Verarbeitungseinheit vorbestimmte Dauer der Entladung des Kondensators muß natürlich so groß gewählt sein, daß der Kondensator vor Beginn des Aufladevorganges völlig entladen ist, da nur damit eindeutige Meßergebnisse erzielbar sind.

Der Kondensator ist mit einem Eingang eines beispielsweise von einem Operationsverstärker gebildeten Komparators verbunden, an dessen anderem Eingang eine Referenzspannung liegt, und welcher die am temperaturproportional während der Temperaturmessung sich aufladenden Kondensator jeweils liegende Spannung mit der Referenzspannung vergleicht. Sobald die temperaturproportionale Kondensatorspannung die Referenzspannung erreicht, ändert der Komparator seinen Ausgangswert, welcher über eine entsprechende Verbindung an einem Eingang der digitalen Verarbeitungseinheit, z. B. des Mikroprozessors, liegt.

Vom Beginn der über die digitale Verarbeitungseinheit mit dem Ende des Entladevorganges festgelegten Temperaturmessung an wird in gleichbleibenden und von der digitalen Verarbeitungseinheit bestimmten zeitlichen Abständen das am Komparatorausgang liegende Signal - welches, aufgrund der völligen Entladung des Kondensators vor dem Beginn der Messung und aufgrund der vorgegebenen Referenzspannung, zu Beginn der Messung auf jeden Fall immer den gleichen, definierten logischen Wert aufweist - auf Änderung zum entsprechend anderen logischen Wert überprüft. Diese Änderung, welche dem Überschreiten der Referenzspannung durch die temperaturproportionale Kondensatorspannung entspricht, wird also - durch die temperaturproportionale Größe des Aufladestromes bedingt - zu einem ganz bestimmten, der jeweiligen Temperatur am Temperaturfühler entsprechenden Zeitpunkt erfolgen. Damit kann die Anzahl der in gleichbleibenden zeitlichen Abständen von der digitalen Verarbeitungseinheit durchgeführten Überprüfungen des Ausgangssignales des Komparators bis zur besagten Änderung als der am Temperaturfühler herrschenden Temperatur entsprechender Digitalwert betrachtet und in der digitalen Verarbeitungseinheit selbst bzw. an einem ihrer Ausgänge entsprechend weiterverwertet werden.

Die Referenzspannung ist in Weiterbildung der Erfindung über einen veränderbaren Widerstand der Referenzspannungsquelle zur Temperaturjustierung des Temperaturfühlers einstellbar. Die Ausgangsspannung der zumindest weitgehend im Hinblick auf Schwankungen der Umgebungstemperatur und der Versorgungsspannung kompensierten Referenzspannungsquelle ist also auf einfache Weise veränderbar, womit auch verschiedenen Charakteristiken von gegebenenfalls verwendeten Temperaturfühlern Rechnung getragen werden kann.

Nach einer besonders vorteilhaften Weiterbildung der Erfindung ist vorgesehen, daß der Kondensator samt Entladetransistor sowie die Referenzspannungsquelle und der Komparator zu einer Meßschaltung zusammengefaßt sind, die in unmittelbarer Nähe des jeweiligen Temperaturfühlers angeordnet und
über eine Steuerleitung mit der digitalen Verarbeitungseinheit verbunden ist.

Diese Ausbildung der notwendigen Verbindung zwischen den
einzelnen Temperaturfühlern und der digitalen Verarbeitungseinheit hat den entscheidenden Vorteil, daß über die
Steuerleitung zwischen der Meßschaltung und der digitalen
Verarbeitungseinheit lediglich logische Zustandsänderungen
übertragen werden, wozu nur zwei deutlich unterscheidbare
Spannungswerte, je einer für "logisch ∅" und "logisch 1",
benötigt werden und wodurch die Anfälligkeit gegenüber
eingekoppelten Störsignalen oder Leckströmen, wie etwa bei
der ebenfalls möglichen direkten Übertragung des temperaturproportionalen Stromes zu einer bei der digitalen Verarbeitungseinheit angeordneten Meßschaltung, ausgeschaltet
werden. Durch geeignete Leitungstreiber, welche entsprechend
große Abstände der den beiden logischen Zustandswerten zugeordneten Spannungen ergeben, können auch nicht abgeschirmte Leitungen in großer Länge verlegt werden, ohne daß eine
Verringerung der Qualität der Messung in Kauf genommen
werden muß.

Nach einem anderen Vorschlag der Erfindung ist auch vorgesehen, daß die digitale Verarbeitungseinheit zur Linearisierung der Temperatur/Digitalwert-Kennlinie des bzw. der
Temperaturfühler(s), durch arithmetische Korrektur von für
einzelne Temperaturen gemessenen Werten dient. Die Ladezeit
t bis zum Erreichen einer über die Referenzspannungsquelle
eingestellten Referenzspannung $U_{ref}$ berechnet sich nach
bekannten Beziehungen der Elektrotechnik zu:

$$t = \frac{U_{ref} \cdot C}{i},$$

wobei

C ... Kapazität des Kondensator, und
i ... vom Temperaturfühler gelieferter
      temperaturproportionaler Strom ist. Da bei gegebener Schaltung von den Größen auf der rechten Seite der obigen Gleichung sich lediglich der Strom i ändern kann, hängt also bei den üblicherweise linearen Temperatur/Strom-Kennlinien der verwendeten Temperaturfühler der über die Ladezeit in der digitalen Verarbeitungseinheit zur Verfügung stehende Digitalwert mit dem temperaturproportionalen Strom i über eine im wesentlichen hyperbolische Kennlinie zusammen, was für die Temperaturregeleinrichtung verschiedene Nachteile bringt. Die Linearisierung dieser Kennlinie über eine von der digitalen Verarbeitungseinheit durchgeführte arithmetische Korrektur, z. B. durch Abziehen von für einzelne Temperaturen eingegebenen Werten von den gemessenen Werten, ist eine besonders einfache Möglichkeit, welche, verglichen mit den bei den bisher bekannten Einrichtungen nicht oder nur mit sehr großem Schaltungsaufwand gegebenen Möglichkeiten zur Linearisierung, nur einen sehr geringen Mehraufwand erfordert.

In Weiterbildung der Erfindung ist vorgesehen, daß bei Abweichen des über einen der Temperaturfühler zur Verfügung stehenden temperaturproportionalen Digitalwertes von einem vorgegebenen Toleranzbereich eine Störungsmelde- bzw. Störungsberücksichtigungseinrichtung von der digitalen Verarbeitungseinheit betätigbar ist. In der zentralen Verarbeitungseinheit der Regeleinrichtung ist also in Form von Digitalwerten ein gewisser Toleranzbereich vorgegeben, innerhalb welchem die über die Temperaturfühler gelieferten Signale bei funktionierendem Temperaturfühler liegen. Aufgrund von außerhalb dieses Toleranzbereiches liegenden, von den Fühlern kommenden Werten kann also ein Defekt des das jeweilige Signal liefernden Fühlers bzw. der Übertragungsleitung angenommen und eine Störungsmelde- bzw. Störungsberücksichtigungseinrichtung betätigt werden, welche, etwa in Form einer Lampe, das Bedienungspersonal auf die Störung aufmerksam macht oder, etwa in Form des Ausschaltens bestimmter Funktionen, die festgestellte Störung berücksichtigt.

Bei einer Zweikanal-Klima- bzw. Heizanlage, bei welcher der Grundleistungskanal Luft mit einer von einem Pilotaußenfühler und der Zusatzkanal Luft mit einer von einem Pilotinnenfühler über eine Steuereinrichtung bestimmten Temperatur führt, ist unter Verwendung der erfindungsgemäßen Temperaturregeleinrichtung in weiterer Ausgestaltung der Erfindung vorgesehen, daß bei festgestellter Störung des Pilotaußen- bzw. Pilotinnenfühlers die Störungsberücksichtigungseinrichtung die Temperaturfühlerzuordnung an der digitalen Verarbeitungseinheit derart ändert, daß der nächstrelevante Innen- bzw. Außenfühler als entsprechender Pilotfühler für die Steuereinrichtung dient. Die Störungsberücksichtigungseinrichtung dient also hier direkt zur Änderung der Temperaturfühlerzuordnung, wobei die "Relevanz" durch an der digitalen Verarbeitungseinheit vorgegebene Größen, wie etwa den Besetungsgrad des jeweiligen Eisenbahnabteils, bestimmt ist. Es kann also auf diese Art sichergestellt werden, daß bei Ausfall eines hauptsächlich für die Tempera- turregelung verantwortlichen Temperaturfühlers die Funk- tion der Klima- bzw. Heizanlage noch weitgehend aufrecht bleibt.

Gemäß einem weiteren Vorschlag der Erfindung ist vorgesehen, daß die Zuordnung von Lufttemperatur in zumindest einem der beiden Kanäle zur über die Fühler gemessenen Temperatur nach einer in der digitalen Verarbeitungseinheit vorbestimmten, nichtlinearen Kennlinie erfolgt. Dies ist eine einfache Möglichkeit, die direkte Auswirkung der genannten Kennlinie auf das Regelverhalten der Klima- bzw. Heizanlage samt Regeleinrichtung zu einer gewünschten Beeinflussung dieses Regelverhaltens auszunutzen.

Die Erfindung wird im folgenden anhand des in der Zeichnung dargestellten Ausführungsbeispiels näher erläutert.

Figur 1 zeigt den schematischen Schaltungsaufbau einer Tem- peraturmeßeinrichtung für eine Temperaturregelein- richtung gemäß der Erfindung,

Figur 2 schematisch eine Temperaturregeleinrichtung nach
der Erfindung,

Figur 3 ein anderes Ausführungsbeispiel und

Figur 4 eine schematische Anordnung einer Zweikanal-Klima-
bzw. Heizanlage mit einer Temperaturregeleinrichtung gemäß der Erfindung.

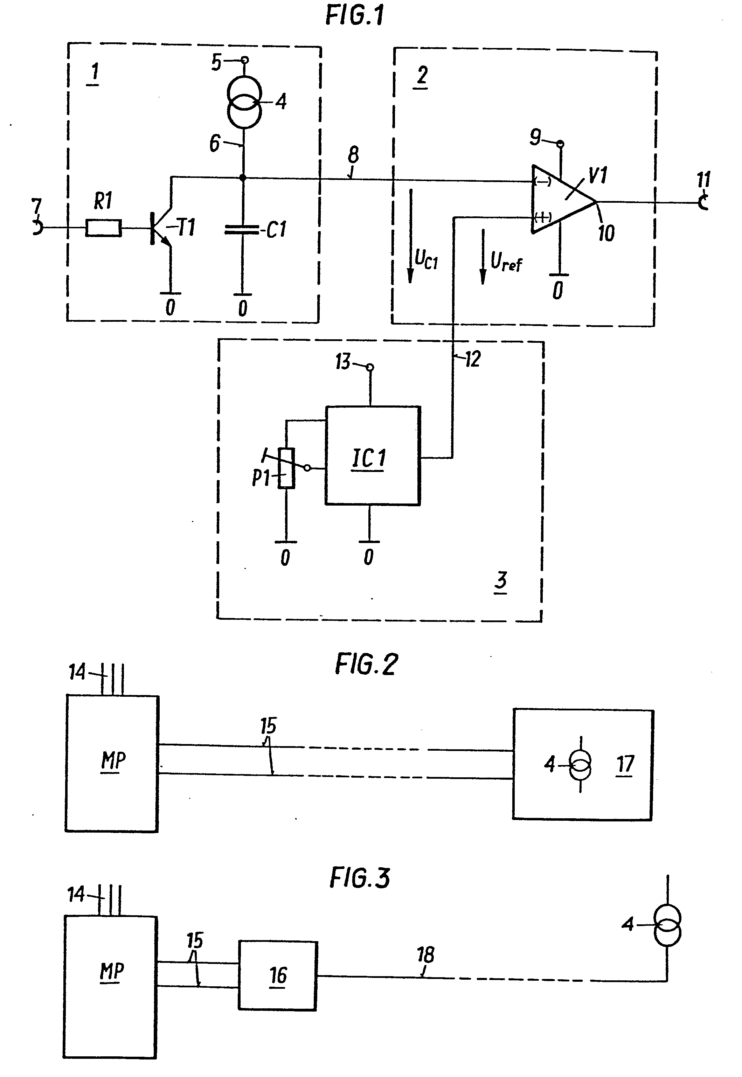

Die Schaltungsanordnung für die Temperaturmeßeinrichtung
gemäß Figur 1 besteht aus drei, hier zur besseren Übersicht
in räumlich getrennte und strichliert umgrenzte Abschnitte
aufgeteilten Grundeinheiten: dem Meßwertbilder 1, dem Komparator 2 und der Referenzspannungsquelle 3. Die digitale
Verarbeitungseinheit, welche zur Auswertung bzw. Steuerung
der im folgenden beschriebenen Temperaturmessung mit der
dargestellten Meßeinrichtung vorgesehen bzw. erforderlich
ist, ist, da zum Verständnis der Funktion der dargestellten
Schaltungsanordnung nicht unbedingt erforderlich, hier
nicht dargestellt, stellt jedoch in gewissem Sinne auch
einen Bestandteil der Temperaturmeßeinrichtung dar.

Der Meßwertbilder 1 weist einen Temperaturfühler 4 auf, der
über einen Anschluß 5 in hier nicht dargestellter Weise mit
der für seinen Betrieb notwendigen Versorgungsspannung verbunden ist und über eine Leitung 6 einen der am Ort des
Temperaturfühlers 4 herrschenden Temperatur proportionalen
Strom liefert. Über die Leitung 6 ist der Temperaturfühler
4 mit einem Kondensator C1 verbunden, welcher somit proportional zur am Ort des Temperaturfühlers 4 herrschenden Temperatur aufgeladen wird. Der Kondensator C1 ist weiters mit
einem Entladetransistor T1 verbunden, der so geschaltet
ist, daß bei Anlegen einer bestimmten Spannung an seine
Basis der Kondensator C1 entladen wird. Die Basis des Transistors T1 ist über einen Widerstand R1 mit einem Ausgang 7
der nicht weiter dargestellten digitalen Verarbeitungseinheit verbunden.

Der Kondensator C1 ist über eine weitere Leitung 8 mit dem invertierenden Eingang (-) des Komparators 2 verbunden, der von einem über einen Anschluß 9 mit der nötigen Versorgungsspannung verbundenen Operationsverstärker V1 gebildet ist und an dessen nichtinvertierendem Eingang (+) eine Referenzspannung $U_{ref}$ liegt. Der Ausgang 10 des Operationsverstärkers V1 bzw. des Komparators 2 liegt an einem Eingang 11 der nicht weiter dargestellten digitalen Verarbeitungseinheit, welche etwa von einem Mikroprozessor gebildet sein kann.

Die am nichtinvertierenden Eingang (+) des Operationsverstärkers V1 liegende Referenzspannung $U_{ref}$ wird über eine Leitung 12 von der Referenzspannungsquelle 3 geliefert, welche einen integrierten Schaltkreis IC1 aufweist, dessen Ausgangsspannung weitgehend temperaturkompensiert ist und der auch Schwankungen in der über den Anschluß 13 gelieferten Versorgungsspannung auszugleichen vermag. Zur Justierung von der über die Leitung 12 gelieferten Referenzspannung $U_{ref}$ ist ein veränderbarer Widerstand P1 in der Referenzspannungsquelle 3 vorgesehen, der zur Temperaturjustierung der gesamten Schaltung verstellt werden kann.

Die für die Bauteile 1, 2, 3 erforderlichen Masseanschlüsse sind mit 0 gekennzeichnet.

Der Ablauf einer Temperaturmessung mit der dargestellten Meßeinrichtung ist folgender:

Zu Beginn der Messung wird über den Ausgang 7 der nicht dargestellten digitalen Verarbeitungseinheit ein "logisch 1" entsprechender Spannungswert über den Widerstand R1 an die Basis des Entladetransistors T1 gelegt, welcher somit durchschaltet und den Kondensator C1 über eine von der digitalen Verarbeitungseinheit bestimmte Zeitdauer entlädt. Um genaue und wiederholbare Meßergebnisse zu sichern, muß die Zeitdauer für die Entladung des Kondensators C1 so groß sein, daß dieser völlig entladen wird. Sodann wird über den Ausgang 7 der digitalen Verarbeitungseinheit ein "logisch 0" entsprechender Spannungswert an die Basis des Transistors sators C1 nicht länger ermöglicht. Über den Temperaturfühler 4 und die Leitung 6 wird nun der Kondensator C1 mit
einem der jeweils am Ort des Temperaturfühlers herrschenden Temperatur entsprechenden Strom aufgeladen. Dieser
Ladevorgang läßt sich, gemäß aus der Elektrotechnik bekannten Beziehungen, durch die folgende Gleichung darstellen.

$$U_{C1} = \frac{i \cdot t}{(C1)} ,$$

wobei $U_{C1}$ die am Kondensator C1 zur Zeit t vorhandene
   Spannung,

 i der über die Leitung 6 gelieferte temperaturproportionale Strom des Temperaturfühlers 4,

 t die Zeit vom Ende des Entladevorganges des
   Kondensators C1 und

(C1) hier den Wert des Kondensators C1 bedeutet.

Über die von der Referenzspannungsquelle 3 gelieferte
Referenzspannung $U_{ref}$ und den Komparator 2 kann nun die
über die Leitung 8 am invertierenden Eingang (-) des Operationsverstärkers V1 liegende jeweilige Spannung des Kondensators C1 dahingehend überprüft werden, ob ein bestimmter
Wert - in diesem Falle $U_{ref}$ - unter- bzw. überschritten
wird. Dies geschieht dadurch, daß der Wert des an einem
Eingang 11 der digitalen Verarbeitungseinheit liegenden
Ausganges 10 des Operationsverstärkers V1 bzw. des Komparators 2 in vorbestimmten, gleichbleibenden Zeitintervallen von der digitalen Verarbeitungseinheit auf Änderung
überprüft wird. Da am Ende des Entladevorganges des Kondensators C1 am invertierenden Eingang (-) des Operationsverstärkers V1 immer der gleiche Spannungswert nämlich "0"
liegt, und auch $U_{ref}$ sich nicht ändert, weist der Ausgang
10 des Operationsverstärkers V1 zur Zeit t = 0 immer den
gleichen logischen Wert, hier "1" auf. Der Zeitpunkt zu
dem die Spannung $U_{C1}$ am Kondensator C1 die Größe der Referenzspannung $U_{ref}$ erreicht, errechnet sich aus der obigen
Gleichung wie folgt:

$$t = \frac{U_{ref} \cdot (C1)}{i}$$

Da sich im rechten Teil dieser Gleichung lediglich der Strom i ändern kann - was über den Temperaturfühler 4 in Abhängigkeit von der Temperatur geschieht - ist also die Zeitdauer t bis der Spannungswert $U_{C1}$ am Kondensator C1 die Referenzspannung $U_{ref}$ erreicht nur von der Temperatur am Temperaturfühler 4 abhängig.

Das am Eingang 11 der digitalen Verarbeitungseinheit liegende logische Signal wird in bestimmten gleichbleibenden zeitlichen Abständen auf Änderung überprüft und die Anzahl der Abfragen vom Ende des Entladens des Kondensators - also t = 0 - bis zur Änderung des Komparatorausgangswertes direkt als Digitalwert der am Temperaturfühler 4 herrschenden Temperatur zugeordnet.

Der beschriebene Schaltungsaufbau stellt eine besonders einfache Möglichkeit zur Temperaturmessung dar, wenn, etwa wegen gewünschter Weiterverarbeitung des temperaturproportionalen Signales in einer digitalen Verarbeitungseinheit, wie im Falle der vorliegenden Erfindung, das der gemessenen Temperatur proportionale Signal in digitaler Form benötigt wird. Die Genauigkeit der Temperaturmessung mit der beschriebenen Schaltungsanordnung hängt, abgesehen von der absoluten Genauigkeit der verwendeten Bauteile, nur mehr von der Taktfrequenz der Änderungs-Abfragen durch die digitale Verarbeitungseinheit ab; eine Temperaturauflösung von $1/10^\circ$C bei einer ebenso großen absoluten Genauigkeit ist mit heutzutage üblichen elektronischen Bauteilen im Zusammenhang mit der beschriebenen Schaltungsanordnung ohne weiteres zu erreichen.

Zur Temperaturjustierung der Meßeinrichtung sowie auch zum Ausgleich der unvermeidlichen Toleranzen der verwendeten Bauteile kann die von der Referenzspannungsquelle 3 gelieferte Referenzspannung $U_{ref}$ über Verstellung des verstellbaren Widerstandes P1 geändert werden. Der Temperaturfühler 4 wird zu diesem Zweck in ein Medium mit auf andere

Art bestimmter konstanter Temperatur eingelegt und sodann der Widerstand P1 so lange verändert, bis an der digitalen Verarbeitungseinheit der gemäß ihrem Programm der im Meßmedium herrschenden Temperatur entsprechende Digitalwert eingelesen wird.

Figur 2 zeigt eine der Möglichkeiten der Meßwertübermittlung vom eigentlichen Temperaturfühler 4 zu einem die digitale Verarbeitungseinheit darstellenden Mikroprozessor MP, welcher die für die Regelung einer nicht weiter dargestellten Klima- bzw. Heizanlage erforderlichen, gemäß einem im Mikroprozessor vorhandenen Programm temperaturabhängigen Regelsignale über Ausgänge 14 abgibt. Die z. B. entsprechend Figur 1 aufgebaute Meßschaltung 17 befindet sich direkt beim jeweiligen Temperaturfühler 4; über eine Steuerleitung 15 werden die logischen Zustandsänderungen, die in der zu Figur 1 ausführlich beschriebenen Weise zur Entladung des Kondensators führen bzw. die Temperaturmessung starten, vom Mikroprozessor auf die Meßschaltung 17 übertragen und über einen zweiten Pol der Leitung 15 wird der jeweilige Ausgangswert des Komparators 2 rückgemeldet. Es handelt sich also um eine reine Impulsübertragung; durch geeignete Leitungstreiber, welche die Spannungsdifferenz zwischen "logisch 0" und "logisch 1" z. B. auf 24 Volt anheben, können sehr große Längen der Steuerleitung 15 ohne Einbußen in der Qualität der Messung realisiert werden.

Die Meßwertübertragung kann aber auch wie in Figur 3 dargestellt erfolgen. Hier befindet sich eine Meßschaltung 16 in unmittelbarer Nähe des Mikroprozessors MP, wodurch die Steuerleitung 15 nur sehr geringe Länge aufweist, und es wird eine eigene Meßleitung 18 verwendet, über welche der vom Temperaturfühler 4 gelieferte temperaturproportionale Strom fließt. Die Meßleitung 18 braucht nicht abgeschirmt werden, da induktive Störungen aufgrund der Übertragung in Form eines Stromes nicht berücksichtigt werden. Es können auch hier große Längen der Meßleitung realisiert werden, soferne nur darauf geachtet wird, daß die hauptsächlich durch Steckverbindungen oder ähnliches verursachten Leckströme gegenüber dem eigentlichen Meßstrom vernachlässigbar bleiben.

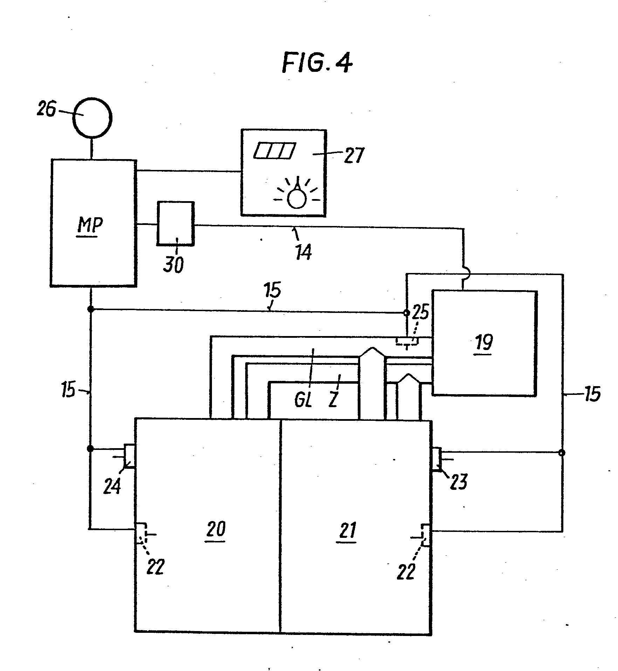

Das in Figur 4 dargestellte Ausführungsbeispiel zeigt eine Zweikanal-Klima- bzw. Heizungsanlage 19, welche mit einer Temperaturregeleinrichtung gemäß der Erfindung über einen Grundleistungskanal GL und einen Zusatzkanal Z die Räume 20, 21 heizt bzw. klimatisiert. Ih den Räumen 20, 21 ist jeweils ein Innentemperaturfühler 22 vorhanden. Weiters sind als Außentemperaturfühler ein Schattenfühler 23, sowie ein Dachfühler (Sonne) 24 vorhanden. Zur Vorregelung der Grundluft dient der Fühler 25 im Grundleistungskanal GL. Die Fühler sind über Steuerleitungen 15 mit dem Mikroprozessor MP verbunden. Die aufgrund der in beschriebener Weise eingelesenen Temperaturwerte gebildeten Steuersignale für die Klima- bzw. Heizungsanlage 19 werden über ein Relais 30 galvanisch getrennt über die Ausgänge 14 übertragen. Stellt der Mikroprozessor auf beschriebene Weise fest, daß ein Temperaturfühler ausgefallen ist, so aktiviert er die Störungsmeldeeinheit 26 und zeigt mit Hilfe der Überwachungseinheit 27 an, welcher Fühler defekt ist bzw. auf welchen Ersatzfühler von der im Mikroprozessor vorhandenen Störungsberücksichtigungseinrichtung umgeschaltet wurde.

Patentansprüche

1. Temperaturregeleinrichtung für Klima- bzw. Heizanlagen, vorzugsweise in Eisenbahnfahrzeugen, mit einer Temperaturmeßeinrichtung mit zumindest einem Temperaturfühler, d a d u r c h   g e k e n n z e i c h n e t, daß der bzw. jeder Temperaturfühler (4) mit einem bzw. je einem Kondensator (C1) verbunden ist und zur Aufladung des Kondensators (C1) mit einem temperaturproportionalen Strom dient, daß der Kondensator (C1) mit einem Eingang (-) eines Komparators (2) verbunden ist, an dessen anderem Eingang (+) eine Referenzspannung ($U_{ref}$) liegt und der, sobald die Kondensatorspannung ($U_{C1}$) die Referenzspannung ($U_{ref}$) erreicht, seinen Ausgangswert ändert, daß der Ausgang (10) des Komparators (2) an einem Eingang (11) einer digitalen Verarbeitungseinheit, z. B. eines Mikroprozessors (MP) liegt, die so geschaltet ist, daß zu Beginn der Temperaturmessung, gesteuert durch die Verarbeitungseinheit, der Kondensator (C1) sich über eine vorbestimmte Zeit entlädt, daß dann in gleichbleibenden zeitlichen Abständen das vom Komparator (2) gelieferte Ausgangssignal von der digitalen Verarbeitungseinheit auf Änderung überprüfbar ist, und die Anzahl der Abfragen vom Ende des Entladens des Kondensators (C1) bis zur Änderung des Komparatorausgangswertes als der gemessenen Temperatur entsprechender Digitalwert in der digitalen Verarbeitungseinheit bzw. an einem ihrer Ausgänge (14) zur Verfügung steht.

2. Temperaturregeleinrichtung nach Anspruch 1, dadurch gekennzeichnet, daß ein mit dem Kondensator (C1) verbundener Entladetransistor (T1) vorgesehen ist, dessen Basis mit einem Ausgang (7) der digitalen Verarbeitungseinheit verbunden ist, welche so geschaltet ist, daß zu Beginn der Temperaturmessung "logisch 1" an der Basis des Entladetransistors (T1) liegt und sich damit über eine vorbestimmte Zeit der Kondensator (C1) entlädt und daß dann "logisch 0" an der Basis des Transistors liegt.

3. Temperaturregeleinrichtung nach Anspruch 1 oder 2, dadurch gekennzeichnet, daß die Referenzspannung ($U_{ref}$) über einen veränderbaren Widerstand (P1) der Referenzspannungsquelle (3) zur Temperaturjustierung des Temperaturfühlers (4) einstellbar ist.

4. Temperaturregeleinrichtung nach den Ansprüchen 2 und 3, dadurch gekennzeichnet, daß der Kondensator samt Entladetransistor sowie die Referenzspannungsquelle und der Komparator zu einer Meßschaltung (17) zusammengefaßt sind, die in unmittelbarer Nähe des jeweiligen temperaturfühlers (4) angeordnet und über eine Steuerleitung (15) mit der digitalen Verarbeitungseinheit (MP) verbunden ist (Figur 2).

5. Temperaturregeleinrichtung nach einem der Ansprüche 1 bis 4, dadurch gekennzeichnet, daß die digitale Verarbeitungseinheit zur Linearisierung der Temperatur/Digitalwert-Kennlinie des bzw. der Temperaturfühler(s), durch arithmetische Korrektur von für einzelne Temperaturen gemessenen Werten dient.

6. Temperaturregeleinrichtung nach einem der Ansprüche 1 bis 5, dadurch gekennzeichnet, daß bei Abweichen des über einen der Temperaturfühler zur Verfügung stehenden temperaturproportionalen Digitalwertes von einem vorgegebenen Toleranzbereich eine Störungsmelde- bzw. Störungsberücksichtigungseinrichtung von der digitalen Verarbeitungseinheit betätigbar ist.

7. Temperaturregeleinrichtung nach Anspruch 6 für eine Zweikanal-Klima- bzw. Heizanlage, bei welcher der Grundleistungskanal Luft mit einer von einem Pilotaußenfühler und der Zusatzkanal Luft mit einer von einem Pilotinnenfühler über die Temperaturregeleinrichtung bestimmten Temperatur führt, dadurch gekennzeichnet, daß bei festgestellter Störung des Pilotaußenfühlers bzw. Pilotinnenfühlers die Störungsberücksichtigungseinrichtung die Temperaturfühlerzuordnung an der digitalen Verarbeitungseinheit derart ändert, daß der nächstrelevante Innen- bzw. Außenfühler als entsprechender Pilotfühler für die
Temperaturregeleinrichtung dient (Figur 4).

8. Temperaturregeleinrichtung nach einem der Ansprüche 1
bis 6 für eine Zweikanal-Klima- bzw. Heizanlage, dadurch
gekennzeichnet, daß die Zuordnung von Lufttemperatur in
zumindest einem der beiden Kanäle zur über die Fühler
gemessenen Temperatur nach einer in der digitalen Verarbeitungseinheit vorbestimmten Kennlinie erfolgt.

FIG.1

FIG.2

FIG.3

FIG.4